# EUROPÄISCHE PATENTSCHRIFT

(11) **EP 0 936 384 B1**
(45) Veröffentlichungstag und Bekanntmachung des Hinweises auf die Patenterteilung: **24.04.2002**
(21) Anmeldenummer: 99100624.8
(22) Anmeldetag: 14.01.1999
(51) Int. Cl.: F16H 59/04

(54) **Betätigungseinrichtung für ein Fahrzeuggetriebe**
Actuating device for a vehicle transmission
Dispositif d'actionnement d'une boîte de vitesses de véhicule

(30) Priorität: 11.02.1998 DE 19805510
(43) Veröffentlichungstag der Anmeldung: 18.08.1999
(73) Patentinhaber: Bayerische Motoren Werke Aktiengesellschaft, 80788 München (DE)
(72) Erfinder: Gouselis, Michael, 86507 Kleinaitingen (DE)

(56) Entgegenhaltungen:
- EP-A- 0 750 138
- EP-A- 0 825 367
- DE-A- 3 634 617
- DE-A- 19 513 810
- DE-C- 549 487

## Beschreibung

Die Erfindung betrifft eine Betätigungseinrichtung für ein Fahrzeuggetriebe nach dem Oberbegriff des Hauptanspruchs.

Die DE 196 32 859 A1 entsprechend der am 25.2.1998 veröffentlichten EP-A-825367 beschreibt eine Betätigungseinrichtung für ein Kraftfahrzeuggetriebe mit einem Schalthebel, der zum Schalten zwischen Getriebeübersetzungen beweglich an einem Kraftfahrzeug angebracht ist, insbesondere in jeweils einer Schaltgasse um eine Schaltachse im wesentlichen in Fahrzeuglängsrichtung schwenkbar und zum Wählen zwischen verschiedenen Schaltgassen in mindestens einer Wählgasse um eine Wählachse im wesentlichen in Fahrzeugquerrichtung schwenkbar. Der Schalthebel ist über ein Bewegungsgetriebe mit mindestens einer Getriebesteuerwelle des Fahrzeuggetriebes verbunden, wobei ein Fahrzeuggetriebegehäuse an dem Bewegungsgetriebe angelenkt ist. Desweiteren ist der Schalthebel an einem karosseriefesten Fahrzeugteil angebracht und das Bewegungsgetriebe besteht in einer Projektion auf eine Schaltebene aus mindestens einer Parallelogrammführung aus vier Stäben, wobei ein Stab fest mit dem Schalthebel verbunden ist, und bei einer Schalt- und/oder Wählbewegung des Schalthebels drei Stäbe in ihrer Lage verändert werden und ein Stab seine Lage beibehält. Dieser Stab ist an seinem einen Ende in der Schaltebene schwenkbeweglich an einem karosseriefesten Fahrzeugteil angebracht und ist an seinem anderen Ende mit dem Fahrzeuggetriebegehäuse über mindestens so viele Freiheitsgrade beweglich verbunden, daß jede räumliche Bewegung des Fahrzeuggetriebegehäuses möglich ist, ohne Reaktionskräfte im Bewegungsgetriebe hervorzurufen, wobei der Stab seine Lage beibehält, der fest mit dem Schalthebel verbunden ist und die anderen drei Stäbe in ihrer Lage verändert werden. Dabei werden die drei Stäbe der Parallelogrammführung, die bei einer Schalt- und/oder Wählbewegung des Schalthebels in ihrer Lage verändert werden, in einer Projektion auf die Schaltebene aus einem ersten Stab zwischen Schaltachse und mindestens einem ersten Verbindungsgelenk zu einem Koppelelement, aus mindestens einem zweiten Stab, zwischen dem ersten Verbindungsgelenk und mindestens einem zweiten Verbindungsgelenk zu einem Verbindungselement, und aus einem dritten Stab, zwischen dem zweiten Verbindungsgelenk und einem dritten Verbindungsgelenk zu einem vierten Stab, gebildet. Dieser vierte Stab ist der Stab der Parallelogrammführung, der bei einer Schalt- und/oder Wählbewegung des Schalthebels seine Lage beibehält, wobei der erste Stab vom Schalthebel, der zweite Stab vom Koppelelement und der dritte Stab vom Verbindungselement gebildet werden. Der vierte Stab ist an seinem einen Ende um eine Befestigungsachse schwenkbar an einem karosseriefesten Fahrzeugteil angelenkt ist und an seinem anderen Ende um das dritte Verbindungsgelenk in alle Richtungen drehbar am Verbindungselement angebracht ist. Von seinem anderen Ende wird durch eine Stützstange die Verbindung zum Fahrzeuggetriebegehäuse hergestellt und das Verbindungselement ist über ein drittes Kugelgelenk am vierten Stab angebracht.

Diese Betätigungseinrichtung hat den Vorteil, daß der Schalthebel seine Lage beibehält, während sich das Fahrzeuggetriebe in beliebiger Richtung im Raum bewegen kann. So werden auch Vibrationen des Getriebes wirksam vor dem Handschalthebel abgefangen.

Nachteilig ist jedoch eine aufwendige Konstruktion und teure Herstellung, die dadurch entsteht, daß der vierte Stab, der seine Lage beibehält, aus einem oberen Halteelementteil und einem unteren Halteelementteil besteht und beide Halteelementteile durch ein Gelenk so verbunden sind, daß sie um eine Halteelementlängsachse gegeneinander verdrehbar sind, wobei die Stützstange zum Fahrzeuggetriebegehäuse am vierten Stab schwenkbar angebracht ist und die Schwenkachse durch den Mittelpunkt des dritten Kugelgelenks verläuft.

Deshalb ist es Aufgabe der Erfindung, den vierten Stab, der seine Lage beibehält, und dessen Verbindung zum Fahrzeuggetriebegehäuse und zu dem dritten Stab der Parallelogrammführung einfacher zu gestalten, damit das Bewegungsgetriebe preiswerter hergestellt werden kann.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist bei einer Betätigungseinrichtung für ein Fahrzeuggetriebe gemäß dem zitierten Stand der Technik das andere Ende des vierten Stabes über ein weiteres Kugelgelenk an der Stützstange angelenkt.

Das hat den Vorteil, daß die Verbindung des vierten Stabes zum Fahrzeuggetriebegehäuse und zu dem dritten Stab der Parallelogrammführung einfacher gestaltet ist und dadurch das Bewegungsgetriebe preiswerter hergestellt werden kann.

Bei bevorzugten Ausführungen der Erfindung wird vorteilhafterweise eine noch einfachere Gestaltung und damit noch preiswertere Herstellung der Betätigungseinrichtung erreicht.

Und zwar, wenn die Verbindung des anderen Endes des vierten Stabes mit der Stützstange und mit dem dritten Stab der Parallelogrammführung als Doppelkugelgelenk ausgebildet ist, bei dem alle miteinander verbundenen Teile in alle Richtungen um denselben Drehmittelpunkt verschwenkt werden können.

Ebenfalls, wenn das andere Ende des vierten Stabes als Haltering ausgebildet ist, in dem eine Kugel des weiteren Kugelgelenks oder des Kugelgelenks verdrehbar gehalten wird, wobei diese Kugel, mit einer Ausnehmung versehen, als Hohlkugel ausgebildet ist und in dieser Ausnehmung eine zusätzliche Kugel des Kugelgelenks oder des weiteren Kugelgelenks verdrehbar gehalten wird.

Desweiteren, wenn der vierte Stab an seinem einen Ende um eine Befestigungsachse schwenkbar an einem karosseriefesten Fahrzeugteil angelenkt ist und an seinem anderen Ende um das dritte Verbindungsgelenk in alle Richtungen drehbar am Verbindungselement angebracht ist.

Und, wenn mindestens ein Element, insbesondere der Schalthebel und/oder die Stäbe des Bewegungsgetriebes, aus Kunststoff besteht.

Bei weiteren vorteilhaften Ausführungen der Erfindung wird die Haptik der Betätigungseinrichtung gezielt beeinflußt, womit ein sicheres Schaltgefühl für den Fahrer erreicht wird, das Unsicherheiten beim Schalten und Fehlschaltungen vermeidet.

Bei einer vorteilhaften Ausführung wird die Haptik der Betätigungseinrichtung dadurch beeinflußt, daß mindestens eine als Gelenk ausgebildete Lagerstelle mindestens eines Elements so gestaltet ist, daß sie durch ihr Reibungsverhalten die Haptik beeinflußt.

Dies kann dadurch erfolgen, daß das Reibungsverhalten durch Reibung erhöhende Reibelemente, insbesondere durch deren Oberflächenbeschaffenheit, beeinflußt wird.

Oder dadurch, daß das Reibungsverhalten durch Reibung verringernde Reibelemente, insbesondere durch spielbehaftete Gelenke, beeinflußt wird.

Für die Schaltsicherheit ganz besonders vorteilhaft ist, wenn die Lagerstelle des Schalthebels so gestaltet ist, daß dessen Schwenkbewegung in Längsrichtung zum Schalten durch erhöhte Reibung gedämpft wird. Wobei sie zusätzlich noch so gestaltet sein kann, daß die Schwenkbewegung des Schalthebels in Querrichtung zum Wählen durch erhöhte Reibung gedämpft wird.

Ebenfalls positiv wird die Haptik der Betätigungseinrichtung beeinflußt, wenn bei dem Gelenk aus Kugel und Hohlkugel zur Verbindung der Stützstange mit dem dritten Stab die Kugel über einen Käfig in der Hohlkugel gelagert ist, wobei dieser Käfig in Längsrichtung der Stützstange spielbehaftet und federbelastet in der Ausnehmung der Hohlkugel angebracht ist.

Bei einer besonders einfachen Ausführung der Erfindung wird die Federbelastung des Käfigs durch ein Gummielement erzeugt.

Ein bevorzugtes Ausführungsbeispiel der Erfindung ist in der nachfolgenden Beschreibung mit der zugehörigen Zeichnung dargestellt. Es zeigen
- Figur 1: einen Teilschnitt einer Betätigungseinrichtung für ein Fahrzeuggetriebe in einer Schaltebene,
- Figur 2: einen Teilschnitt einer Betätigungseinrichtung für ein Fahrzeuggetriebe in einer Wählebene,
- Figur 3: eine Ansicht eines Reibelements zur Beeinflussung der Haptik der Betätigungseinrichtung,
- Figur 4: einen weiterer Teilschnitt einer Betätigungseinrichtung für ein Fahrzeuggetriebe in einer Wählebene
- Figur 5: eine vergrößerte Darstellung des mit der Bezugsziffer 41 gekennzeichneten Teilbereichs aus Figur 1 und
- Figur 6: die Betätigungseinrichtung zusammen mit einem Teil des Fahrzeuggetriebes in räumlicher Darstellung.

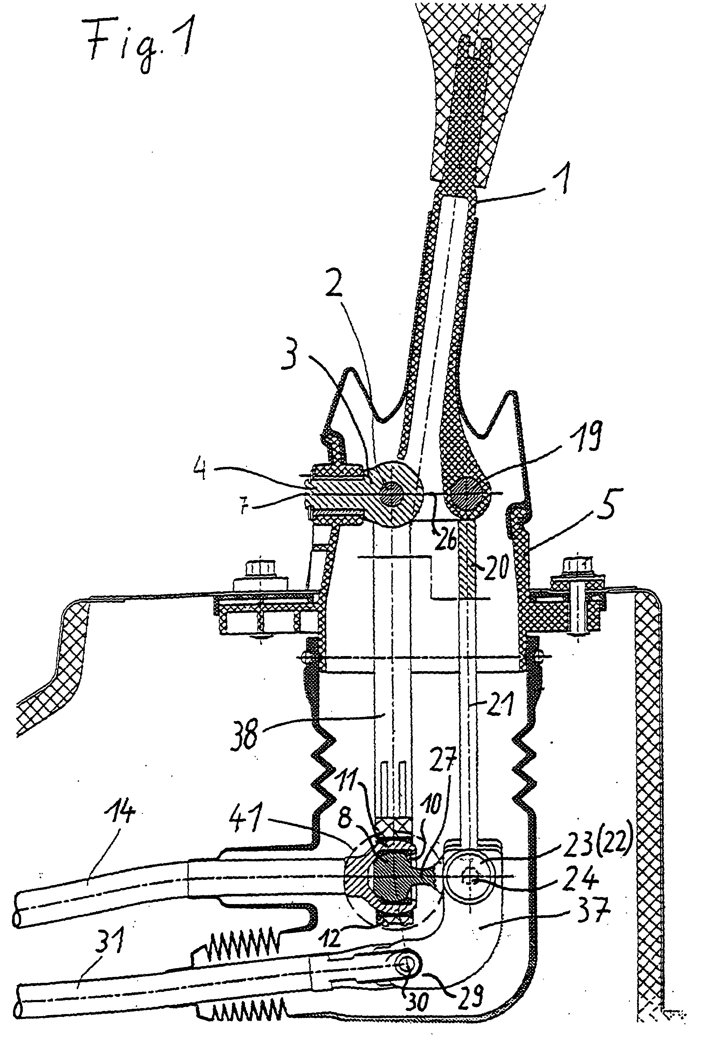

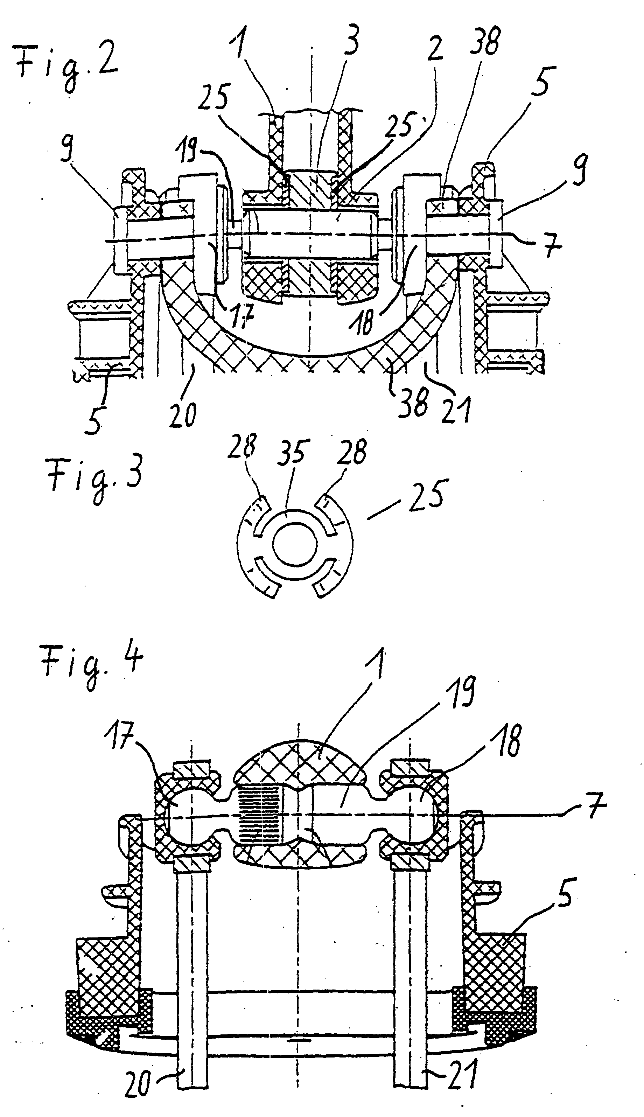

In Figur 1 werden zuerst die einzelnen Bauteile der Betätigungseinrichtung für ein Fahrzeuggetriebe erläutert. Die Funktion der einzelnen Bauteile wird dann unter Einbeziehung der Figuren 2, 4 und 6 dargestellt.

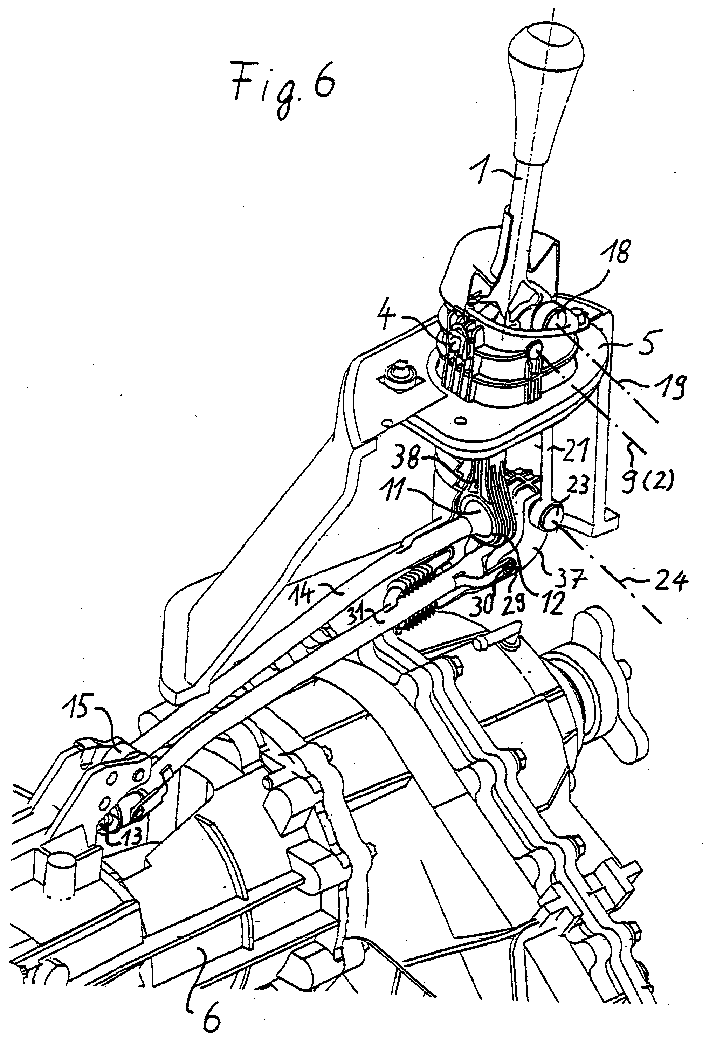

In Figur 1 ist mit 1 ein Schalthebel bezeichnet, der karosseriefest an einer Konsole 5 über eine Schaltachsenaufnahme 3 um eine Schaltachse 2 und eine Wählachse 4 schwenkbar angebracht ist. Beim Schwenken des Schalthebels 1 wird durch diesen ein Koppelelement betätigt, das aus zwei, in dieser Figur deckungsgleichen, Koppelstangen 20, 21 besteht, die über, in dieser Figur nicht sichtbare, erste Kugelgelenke 17, 18 (Figuren 4 und 6) mit dem Schalthebel 1 verbunden sind. Dabei verläuft eine erste Achse 19, die die ersten Kugelgelenke 17 und 18 verbindet, parallel zur Schaltachse 2. Die Koppelstangen 20, 21 sind wiederum über, in dieser Figur deckungsgleiche, zweite Kugelgelenke 22, 23 an einem als Winkelhebel 37 ausgebildeten Verbindungselement befestigt. Das Koppelelement ist so gestaltet, daß die erste Achse 19 parallel zu einer, gestrichelt angedeutet gezeichneten, zweiten Achse 24, der Verbindungsachse der zweiten Kugelgelenke 22, 23, geführt wird (auch Figur 6).

Das als Winkelhebel 37 ausgeführte Verbindungselement ist über ein drittes Kugelgelenk 8 mit einer Stützstange 14 beweglich verbunden, wobei diese über ein weiteres Kugelgelenk 11 an einem Halteelement 38 bewegbar angebracht ist. Diese Verbindung des anderen Endes des vierten Stabes, also des anderen Endes des Halteelements 38, mit der Stützstange 14 und mit dem dritten Stab der Parallelogrammführung, also dem Winkelhebel 37, ist als Doppelkugelgelenk ausgebildet, bei dem alle miteinander verbundenen Teile in alle Richtungen um denselben Drehmittelpunkt verschwenkt werden können. Dazu ist das andere Ende des Halteelements 38 als Haltering 12 gestaltet, in dem eine Kugel des weiteren Kugelgelenks 11 verdrehbar gehalten wird, wobei diese Kugel mit einer Ausnehmung 10 als Hohlkugel ausgebildet ist. In dieser Ausnehmung 10 wird eine zusätzliche Kugel des dritten Kugelgelenks 8 verdrehbar gehalten.

Die Stützstange 14 stellt eine schwenkbewegliche Verbindung zu einem Fahrzeuggetriebegehäuse 6 her (Figur 6). Außerdem trägt der Winkelhebel 37 am Ende eines ersten Schenkels 29 um eine dritte Achse 30 schwenkbar gelagert eine Schaltstange 31. Die Schaltstange 31 ist die die Schaltbewegung ausführende Verbindung zu einer Getriebesteuerwelle 13 des Fahrzeuggetriebes. Die zweite Achse 24 und die dritte Achse 30 sind parallel zueinander.

Das Halteelement 38, an dessen anderem Ende der Winkelhebel 37 und die Stützstange 14 über das Doppelkugelgelenk aus drittem Kugelgelenk 8 und weiterem Kugelgelenk 11 angebracht sind, ist an seinem einen Ende um eine Befestigungsachse 9 schwenkbar an der Konsole 5 angebracht (Figuren 2 und 6). Die Schaltachse 2 und die Befestigungsachse 9 verlaufen bei in Wählrichtung nicht ausgelenktem Schalthebel 1 koaxial, sind aber bei einer Bewegung des Schalthebels 1 in Wählrichtung voneinander entkoppelt.

Figur 1 zeigt mit Figur 2 zusammen klarer, daß über die Wählachse 4 die Schaltachsenaufnahme 3 schwenkbeweglich an einer karosseriefesten Konsole 5 gelagert ist. Der Schalthebel 1 kann in Schaltrichtung um die Schaltachse 2 betätigt werden. Die Schaltachse 2 ist in der Schaltachsenaufnahme 3 gelagert. Mit dieser kann der Schalthebel 1 um die Wählachse 4 verschwenkt werden. In Wählrichtung werden Schalthebel 1 und Schaltachsenaufnahme 3 gemeinsam um die Wählachse 4 gedreht. Der Schalthebel 1 besitzt zwei Freiheitsgrade, Schaltachse 2 und Wählachse 4 stehen aufeinander senkrecht und befinden sich auf einer gemeinsamen Ebene 7. Allerdings wäre es auch denkbar, den Schalthebel 1 in einer anderen Ausführungsform der Erfindung in der Ebene 7 über ein Kugelgelenk in der Konsole 5 zu lagern.

Die Bewegung des Schalthebels 1 wird zum Schalten zwischen Getriebeübersetzungen über ein Bewegungsgetriebe auf die Getriebesteuerwelle 13 übertragen. Das Bewegungsgetriebe besteht, in einer Projektion auf eine Schaltebene, entsprechend Figur 1, gesehen, aus mindestens einer Parallelogrammführung aus vier Stäben, wobei ein erster Stab 26 vom Schalthebel 1, ein zweiter Stab vom Koppelelement und ein dritter Stab vom Verbindungselement gebildet werden. Den vierten Stab der Parallelogrammführung bildet das Halteelement 38, das bei einer Schaltund/oder Wählbewegung des Schalthebels 1 seine Lage beibehält.

In Figur 2 ist deutlich erkennbar, daß das Halteelement 38 mit seinem einen Ende über die Befestigungsachse 9 in der Konsole 5 schwenkbar gelagert ist. Die Schaltachse 2 und die Befestigungsachse 9 sind koaxial zueinander, wenn sich der Schalthebel 1 auf seiner gezeichneten neutralen Stelle befindet. Das dritte Kugelgelenk 8 kann mit dem Halteelement 38 als Pendel um die Befestigungsachse 9 rotieren, deren Drehachse mit der in Figur 1 sichtbaren Schaltachse 2 kongruent ist, wenn der Schalthebel 1, wie dargestellt, in Wählrichtung nicht ausgelenkt ist.

Die Stützstange 14 ist an ihrem getriebeseitigen Ende durch ein zusätzliches elastisches Gelenk 15 am Fahrzeuggetriebegehäuse 6 befestigt (Figur 6). Der Abstand des dritten Kugelgelenks 8 zum zusätzlichen elastischen Gelenk 15 und damit auch zum Fahrzeuggetriebegehäuse 6 ist somit festgelegt. Das elastische Gelenk 15 selbst hat drei Freiheitsgrade, so daß die Stützstange 14 nur Druck- und Zugkräfte und keine Drehmomente aufnehmen kann. Auf diese Weise ist das Halteelement 38 an seinem anderen Ende mit dem Fahrzeuggetriebegehäuse 6 über mindestens so viele Freiheitsgrade beweglich verbunden, daß jede räumliche Bewegung des Fahrzeuggetriebegehäuses 6 möglich ist, ohne Reaktionskräfte im Bewegungsgetriebe hervorzurufen, wobei der erste Stab 26 seine Lage beibehält, und die anderen drei Stäbe, Halteelement 38, zweiter Schenkel 27 und Koppelelement, in ihrer Lage verändert werden.

Die ersten Kugelgelenke 17, 18 (Figuren 4 und 6), als erstes Verbindungsgelenk der Parallelogrammführung, sind am Schalthebel 1 befestigt und deren Verbindungsachse, die erste Achse 19, ist parallel zur Schaltachse 2 (Figur 1). Das Koppelelement aus den Koppelstangen 20, 21 ist über die ersten Kugelgelenke 17, 18 an der ersten Achse 19 befestigt. Die ersten Kugelgelenke 17, 18 haben drei Freiheitsgrade.

Am anderen Ende der Koppelstangen 20, 21 (Figuren 1 und 6) sind diese über zweite Kugelgelenke 22, 23, als zweitem Verbindungsgelenk der Parallelogrammführung, mit der zweiten Achse 24, die parallel zur ersten Achse 19 verläuft, verbunden. Die beiden Koppelstangen 20, 21 können parallel zueinander sein. Dies ist jedoch nicht Bedingung. Sind die beiden Koppelstangen 20, 21 parallel, bilden sie mit dem Schalthebel 1 und dem Winkelhebel 37 eine weitere Parallelogrammführung in einer Ebene senkrecht zur Schaltebene. Liegen die Koppelstangen 20, 21 dagegen nicht parallel, so spannen die ersten Kugelgelenke 17,18 mit den zweiten Kugelgelenken 22,23 ein trapezförmiges Viergelenkgetriebe auf.

Der erste Stab 26 der Parallelogrammführung verbindet die erste Achse 19 mit der Schaltachse 2 des Schalthebels 1 (Figur 1). Der zweite Schenkel 27 des Verbindungselements, als dritter Stab der Parallelogrammführung, verbindet die zweite Achse 24 mit dem dritten Verbindungsgelenk, dem Kugelgelenk 8. Der erste Stab 26 ist parallel zum dritten Stab und senkrecht zur ersten Achse 19. Der dritte Stab ist ebenfalls senkrecht zur zweiten Achse 24. Das Halteelement 38, als vierter Stab der Parallelogrammführung, das die Konsole 5 in der Schaltebene, kongruent zur Position der Schaltachse 2, mit dem dritten Kugelgelenk 8 verbindet, ist parallel zur von der weiteren Parallelogrammführung aufgespannten Ebene. Der erste Stab 26, das Halteelement 38 und der dritte Stab befinden sich in der Schaltebene, die senkrecht zur Ebene der weiteren Parallelogrammführung steht, und bilden mit dem Koppelelement ein Parallelogramm. Der Abstand des ersten Stabes 26 von den ersten Kugelgelenken 17, 18 ist gleich groß. Der Abstand des dritten Stabes von den zweiten Kugelgelenken 22, 23 ist ebenfalls gleich groß. Der dritte Stab entspricht dem zweiten Schenkel 27 des Winkelhebels 37 und ist mit dem ersten Schenkel 29 des Winkelhebels 37 starr verbunden.

Die dritte Achse 30 ist senkrecht zum ersten Schenkel 29 des Winkelhebels 37. Die Schaltstange 31 ist senkrecht zur dritten Achse 30. Die Schaltstange 31 muß nur dann senkrecht zum ersten Schenkel 29 des Winkelhebels 37 sein, wenn sich der Schalthebel 1 in seiner Einbaulage befindet. Die Schaltstange 31 ist so gestaltet, daß sie Kräfte nur in Richtung der Längsachse und Drehmomente nur um die Längsachse der Getriebesteuerwelle 13 ausüben kann. Die Getriebesteuerwelle 13 hat also zwei Freiheitsgrade.

Bei einer Bewegung des Schalthebels 1 um die Wählachse 4 dreht sich dieser zusammen mit der Schaltachsenaufnahme 3. Das hat zur Folge, daß die erste Achse 19 durch den ersten Stab 26 ebenfalls um die Wählachse 4 gedreht wird. Die ersten Kugelgelenke 17, 18 drehen um die Wählachse 4 mit einem Radius, der der halben Länge der ersten Achse 19 entspricht (Figur 4). Die Koppelstangen 20 und 21 setzen diese Drehbewegung in geradlinige Bewegung um. Die zweiten Kugelgelenke 22, 23 bewegen sich dabei auf einem Kreis um den zweiten Schenkel 27 mit einem Radius, der der halben Länge der zweiten Achse 24 entspricht. Da der dritte Stab, der erste Schenkel 29 und die dritte Achse 30 durch den Winkelhebel 37 gebildet werden und deshalb starr miteinander verbunden sind, drehen sich diese um das dritte Kugelgelenk 8. Der Drehradius der dritten Achse 30 entspricht ihrem Abstand vom Mittelpunkt des dritten Kugelgelenks 8. Durch diese Drehbewegung wird die Getriebesteuerwelle 13 über die Schaltstange 31 gedreht, bis der entsprechende Gang gewählt wird. Die Reaktionskräfte des Wählvorgangs werden durch das Halteelement 38 auf die Befestigungsachse 9 und damit über die Konsole 5 auf ein fahrzeugfestes Teil, zum Beispiel das Bodenblech des Fahrzeugs, übertragen.

Bei einer Bewegung des Schalthebels 1 in Schaltrichtung wird dieser um die Schaltachse 2 gedreht. Die erste Achse 19, durch den ersten Stab 26, dreht ebenfalls um die Schaltachse 2. Die Koppelstangen 20, 21 setzen diese Drehbewegung in geradlinige Bewegung um. Die zweite Achse 24, durch den dritten Stab, dreht um das dritte Kugelgelenk 8. Die dritte Achse 30 dreht ebenfalls um das dritte Kugelgelenk 8. Durch diese Drehbewegung wird die Getriebesteuerwelle 13 in geradlinige Bewegung versetzt und schaltet den entsprechenden Gang. Die Schaltstange 31 überträgt als Zwischenelement diese Bewegung. Die Stützstange 14 übernimmt einen Teil der Reaktionskräfte beim Schaltvorgang und stützt sich dabei am Fahrzeuggetriebegehäuse 6 ab. Einen Teil der Reaktionskräfte überträgt das Halteelement 38 auf die Befestigungsachse 9 und damit über die Konsole 5 auf ein fahrzeugfestes Teil, zum Beispiel das Bodenblech des Fahrzeugs. Der erste Stab 26 muß gleich lang sein wie der zweite Schenkel 27.

Bei allen Fahrzuständen, insbesondere beim Fahren auf unebenen Straßen, Start - Stop des Motors, Lastwechseländerungen am Antriebsstrang und hohen Motordrehzahlen führt der Motor mit dem Fahrzeuggetriebe gemeinsam eine translatorische Bewegung und eine rotatorische Bewegung im Raum aus. Diese relativen Bewegungen des Antriebsstranges zur Karosserie übertragen sich aufgrund des Bewegungsgetriebes nicht auf den Schalthebel 1. Für Schwingungen des Antriebsstranges gilt entsprechendes.

Der Schalthebel 1, das Halteelement 38 und die Koppelstangen 20,21 bestehen aus Kunststoff. Bei so entsprechend leicht gestalteten Elementen des Bewegungsgetriebes kann die Haptik der Betätigungseinrichtung durch das Reibungsverhalten zwischen den Elementen leicht beeinflußt werden. Dazu ist, wie in Figur 2 dargestellt, die als Gelenk ausgebildete Lagerstelle des Schalthebels 1 auf der Schaltachse 2 mit Reibelementen versehen, durch deren Oberflächenbeschaffenheit die Reibung des Schalthebels 1 für seine Schwenkbewegung in Schaltrichtung erhöht wird. Als Reibelemente dienen zwei zwischen Schalthebel 1 und Schaltachsenaufnahme 3 eingebaute Federscheiben 25, die mit Federzungen 28 am Schalthebel 1 reiben und sich mit Schleifflächen 35 an der Schaltachsenaufnahme 3 abstützen. Eine solche Federscheibe 25 ist in Figur 3 dargestellt. Auf diese Weise kann auch die Schwenkbewegung des Schalthebels 1 in Querrichtung zum Wählen durch erhöhte Reibung gedämpft werden.

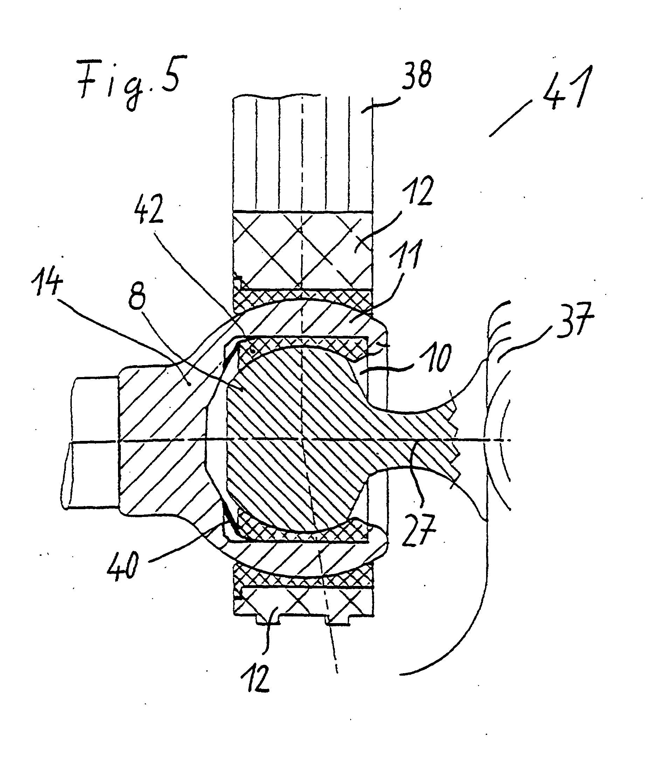

Im Doppelkugelgelenk, in Figur 1 und Figur 5, wird das Reibungsverhalten durch ein die Reibung verringerndes Reibelement, nämlich das spielbehaftete Kugelgelenk 8, beeinflußt. Dazu ist bei dem Gelenk aus Kugel und Hohlkugel zur Verbindung der Stützstange 14 mit dem Winkelhebel 37 die Kugel über einen Käfig 42 in der Hohlkugel gelagert. Dieser Käfig 42 ist in Längsrichtung der Stützstange 14 spielbehaftet und federbelastet in der Ausnehmung 10 der Hohlkugel angebracht, wobei die Federbelastung durch ein Gummielement 40 erzeugt wird. Somit entsteht eine geringere voreingestellte Reibung im dritten Kugelgelenk 8, die Geräusche vermeidet, da sich der Käfig 42 in der Ausnehmung 10 bewegen kann.

## Patentansprüche

1. Betätigungseinrichtung für ein Fahrzeuggetriebe mit einem Schalthebel (1), der zum Schalten zwischen Getriebeübersetzungen beweglich an einem karosseriefesten Fahrzeugteil eines Kraftfahrzeugs angebracht ist, insbesondere in jeweils einer Schaltgasse um eine Schaltachse (2) im wesentlichen in Fahrzeuglängsrichtung schwenkbar und zum Wählen zwischen verschiedenen Schaltgassen in mindestens einer Wählgasse um eine Wählachse (4) im wesentlichen in Fahrzeugquerrichtung schwenkbar, und der über ein Bewegungsgetriebe mit mindestens einer Getriebesteuerwelle (13) des Fahrzeuggetriebes verbunden ist, wobei ein Fahrzeuggetriebegehäuse (6) an dem Bewegungsgetriebe angelenkt ist, das in einer Projektion auf eine Schaltebene aus mindestens einer Parallelogrammführung aus vier Stäben besteht, wobei ein Stab (26) fest mit dem Schalthebel (1) verbunden ist, und bei einer Schalt- und/oder Wählbewegung des Schalthebels (1) drei Stäbe in ihrer Lage verändert werden und ein vierter Stab (38) seine Lage beibehält, der an seinem einen Ende in der Schaltebene schwenkbeweglich an einem karosseriefesten Fahrzeugteil angebracht ist und an seinem anderen Ende mit einem dritten Stab (27) der Parallelogrammführung über ein Kugelgelenk (8) in alle Richtungen drehbar und mit dem Fahrzeuggetriebegehäuse (6) durch eine Stützstange (14) über mindestens so viele Freiheitsgrade beweglich verbunden ist, daß jede räumliche Bewegung des Fahrzeuggetriebegehäuses (6) möglich ist, welche keine Reaktionskräfte im Bewegungsgetriebe hervorruft und bei der der Stab (26) der Parallelogrammführung seine Lage beibehält, der fest mit dem Schalthebel (1) verbunden ist und die anderen drei Stäbe der Parallelogrammführung in ihrer Lage verändert werden, **dadurch gekennzeichnet, daß** das andere Ende des vierten Stabes (38) über ein weiteres Kugelgelenk (11) an der Stützstange (14) angelenkt ist.

2. Betätigungseinrichtung nach Anspruch 1, **dadurch gekennzeichnet, daß** die Verbindung des anderen Endes des vierten Stabes (38) mit der Stützstange (14) und mit dem dritten Stab (27) der Parallelogrammführung als Doppelkugelgelenk ausgebildet ist, bei dem alle miteinander verbundenen Teile in alle Richtungen um denselben Drehmittelpunkt verschwenkt werden können.

3. Betätigungseinrichtung nach Anspruch 2, **dadurch gekennzeichnet, daß** das andere Ende des vierten Stabes (38) als Haltering (12) ausgebildet ist, in dem eine Kugel des weiteren Kugelgelenks (11) oder des Kugelgelenks (8) verdrehbar gehalten wird, wobei diese Kugel, mit einer Ausnehmung (10) versehen, als Hohlkugel ausgebildet ist und in dieser Ausnehmung (10) eine zusätzliche Kugel des Kugelgelenks (8) oder des weiteren Kugelgelenks (11) verdrehbar gehalten wird.

4. Betätigungseinrichtung nach einem der Ansprüche 1 bis 3, **dadurch gekennzeichnet, daß** der vierte Stab (38) an seinem einen Ende um eine Befestigungsachse (9) schwenkbar an dem karosseriefesten Fahrzeugteil angelenkt ist.

5. Betätigungseinrichtung nach einem der Ansprüche 1 bis 4, **dadurch gekennzeichnet, daß** mindestens ein Element, insbesondere der Schalthebel (1) und/oder die Stäbe des Bewegungsgetriebes, aus Kunststoff besteht.

6. Betätigungseinrichtung nach einem der Ansprüche 1 bis 5, **dadurch gekennzeichnet, daß** mindestens eine als Gelenk ausgebildete Lagerstelle mindestens eines Elements so gestaltet ist, daß sie die Haptik der Betätigungseinrichtung durch ihr Reibungsverhalten beeinflußt.

7. Betätigungseinrichtung nach Anspruch 6, **dadurch gekennzeichnet, daß** das Reibungsverhalten durch Reibung erhöhende Reibelemente, insbesondere durch deren Oberflächenbeschaffenheit, beeinflußt wird.

8. Betätigungseinrichtung nach Anspruch 6, **dadurch gekennzeichnet, daß** das Reibungsverhalten durch Reibung verringernde Reibelemente, insbesondere durch spielbehaftete Gelenke, beeinflußt wird.

9. Betätigungseinrichtung nach einem der Ansprüche 6 bis 8, **dadurch gekennzeichnet, daß** die Lagerstelle des Schalthebels (1) so gestaltet ist, daß dessen Schwenkbewegung in Längsrichtung zum Schalten durch erhöhte Reibung gedämpft wird.

10. Betätigungseinrichtung nach einem der Ansprüche 6 bis 9, **dadurch gekennzeichnet, daß** die Lagerstelle des Schalthebels (1) so gestaltet ist, daß dessen Schwenkbewegung in Querrichtung zum Wählen durch erhöhte Reibung gedämpft wird.

11. Betätigungseinrichtung nach einem der Ansprüche 6 bis 10, **dadurch gekennzeichnet, daß** bei dem Gelenk aus Kugel und Hohlkugel zur Verbindung der Stützstange (14) mit dem dritten Stab (27) die Kugel über einen Käfig (42) in der Hohlkugel gelagert ist, wobei dieser Käfig (42), in Längsrichtung der Stützstange (14), spielbehaftet und federbelastet in der Ausnehmung (10) der Hohlkugel angebracht ist.

12. Betätigungseinrichtung nach Anspruch 11, **dadurch gekennzeichnet, daß** die Federbelastung des Käfigs (42) durch ein Gummielement (40) erzeugt wird.

## Claims

1. An actuating device for a vehicle gear unit comprising a shift lever (1) which for the purpose of gear-shifting is movably mounted on a part of a vehicle fixed to the body, especially pivotable in a respective shift channel around an axis (2) substantially in the longitudinal direction of the vehicle and, for the purpose of selecting between different shift channels, is pivotable in at least one selection channel around an axis (4) substantially in the transverse direction of the vehicle, the lever being connected by a drive unit to at least one control shaft (13) of the gear unit, wherein a drive-unit casing (6) is pivoted to the drive unit and, in projection on a gearshift plane, comprises at least one parallel guide made up of four bars, one bar (26) being permanently connected to the shift lever (1) and, in the event of a shifting and/or selecting movement by the shift lever (1), three bars change position and a fourth bar (38) which stays in position, is connected at one end to a part of the vehicle fixed to the body so as to be pivotable in the gearshift plane, whereas its other end, with a third bar (27) of the parallelogram guide, is rotatable via a ball joint (8) in all directions and is connected to the gear unit casing (6) via a support rod (14) so as to be movable in at least sufficient degrees of freedom for any movement in space of the gear-unit casing (6) to be possible which does not cause reaction forces in the drive unit, and in which the rod (26) of the parallelogram guide firmly connected to the shift lever (1) remains in position whereas the other three bars of the parallelogram guide change position, **characterised in that** the other end of the fourth bar (38) is pivoted to the supporting rod (14) via an additional ball joint (11).

2. An actuating device according to claim 1, **characterised in that** the connection of the other end of the fourth bar (38) to the supporting rod (14) and to the third bar (27) of the parallelogram guide is in the form of a double ball joint wherein all interconnecting parts are pivotable in all directions around the same centre of rotation.

3. An actuating device according to claim 2, **characterised in that** the other end of the fourth bar (38) is a retaining ring (12) in which a ball of the additional ball joint (11) or of the ball joint (8) is rotatably held, wherein the said ball has a recess (10) and is hollow, and an additional ball of the ball joint (8) or of the additional ball joint (11) is rotatably held in the recess (10).

4. An actuating device according to any of claims 1 to 3, **characterised in that** one end of the fourth bar (38) is connected to the part of the vehicle fixed to the body so as to be pivotable around an axis (9).

5. An actuating device according to any of claims 1 to 4, **characterised in that** at least one element, especially the shift lever (1) and/or the bars of the drive units, is of plastics material.

6. An actuating device according to any of claims 1 to 5, **characterised in that** at least one bearing in the form of a joint of at least one element is so constructed that the feel of the actuating device is influenced by its friction properties.

7. An actuating device according to claim 6, **characterised in that** the friction properties are influenced by friction-increasing elements, especially by their surface nature.

8. An actuating device according to claim 6, **characterised in that** the friction properties are influenced by friction-reducing elements, especially by loose joints.

9. An actuating device according to any of claims 6 to 8, **characterised in that** the bearing of the shift lever (1) is so constructed that its pivoting motion in the longitudinal direction for gear-shifting is damped by increased friction.

10. An actuating device according to any of claims 6 to 9, **characterised in that** the bearing of the shift lever (1) is so constructed that its pivoting motion in the transverse direction for gear selection is damped by increased friction.

11. An actuating device according to any of claims 6 to 10, **characterised in that**, in the case of the joint comprising a ball and hollow ball for connecting the supporting rod (14) to the third rod (27), the ball is mounted in the hollow ball via a cage (42), wherein the cage (42) has clearance in the longitudinal direction of the supporting rod (14) and is spring-loaded in the recess (10) in the hollow ball.

12. An actuating device according to claim 11, **characterised in that** the spring loading of the cage (42) is generated by a rubber element (40).

## Revendications

1. Dispositif d'actionnement d'une boîte de vitesses d'un véhicule automobile dans lequel :
- un levier de manoeuvre, pour commuter les rapports de transmission, est monté mobile sur une partie fixe de la carrosserie du véhicule, et peut basculer, essentiellement selon la direction longitudinale du véhicule, à l'intérieur de chacune des cases de rapport, autour d'un axe de commutation (2) et également autour d'un axe de sélection, essentiellement transversalement par rapport au véhicule dans au moins une ligne de sélection pour opérer une sélection entre les différents rapports,
- le levier de manoeuvre est relié à au moins un arbre de commande (13) de la boîte de vitesses par un mécanisme de déplacement qui est articulé au boîtier (6) de la boîte et qui, en projection sur un plan de commutation est constitué par au moins un guidage à parallélogramme composé de quatre barres,
- une barre (26) est solidaire du levier de manoeuvre (1) et quand celui-ci se déplace pour commuter ou sélectionner, trois barres changent de position tandis que conserve sa position la quatrième barre (38) qui peut basculer par une extrémité sur une partie de véhicule fixée à la carrosserie dans un plan de commutation tandis qu'à son autre extrémité elle est reliée à une troisième barre (27) de guidage à parallélogramme en pouvant tourner dans toutes les directions par l'intermédiaire d'une articulation à rotule (8) et au boîtier (6) de la boite de vitesses par une tige de soutien (14), avec une mobilité présentant assez de degrés de liberté pour que tout mouvement spatial du boîtier (6) soit possible sans créer dans le mouvement de déplacement des forces de réaction, tout en assurant le maintien de la position de la barre (26) de guidage à parallélogramme tandis que les trois autres barres de ce parallélogramme changent de positions,
**caractérisé en ce que**
l'autre extrémité de la quatrième barre (38) est articulée à la tige de soutien (14) par une autre articulation à rotule (11).

2. Dispositif d'actionnement selon la revendication 1,
**caractérisé en ce que**
la liaison de l'autre extrémité de la quatrième barre (38) avec la tige de soutien (14) et avec la troisième barre (27) du guidage à parallélogramme est une articulation à double rotule, permettant à toutes les parties reliées entre elles de s'orienter dans toutes les directions autour du même centre de rotation.

3. Dispositif d'actionnement selon la revendication 2,
**caractérisé en ce que**
l'autre extrémité de la quatrième barre (31) a la forme d'une bague de maintien (12) dans laquelle est maintenue en pouvant tourner une rotule de l'autre articulation à rotule (11) ou de l'articulation à rotule (8), cette rotule qui présente un évidement ayant la forme d'une rotule creuse dans l'évidement (10) de laquelle est maintenue avec possibilité de rotation, une rotule supplémentaire de l'articulation à rotule (8) ou de l'autre articulation à rotule (11).

4. Dispositif d'actionnement selon l'une quelconque des revendications 1 à 3,
**caractérisé en ce que**
la quatrième barre (38 est, à une de ses extrémités, articulée à la partie solidaire de la carrosserie du véhicule, en pouvant pivoter autour d'un axe de fixation (9).

5. Dispositif d'actionnement selon l'une quelconque des revendications 1 à 4,
**caractérisé en ce qu'**
au moins un élément, en particulier le levier de manoeuvre (1) et/ou une des barres du mécanisme de déplacement est en matière plastique.

6. Dispositif d'actionnement selon l'une quelconque des revendications 1 à 5,
**caractérisé en ce qu'**
au moins un point de montage d'au moins un élément ayant la forme d'une articulation, est configuré de manière à influencer par son comportement de fixation, la sensation nouvelle donnée par le dispositif d'actionnement.

7. Dispositif d'actionnement selon la revendication 6,
**caractérisé en ce que**
le comportement de friction est influencé par des éléments de friction augmentant cette friction, en particulier par l'intermédiaire de leur constitution superficielle.

8. Dispositif d'actionnement selon la revendication 6,
**caractérisé en ce que**
le comportement de friction est influencé par des éléments de friction réduisant cette friction, en particulier des articulations présentant du jeu.

9. Dispositif d'actionnement selon l'une quelconque des revendications 6 à 8,
**caractérisé en ce que**
le point de montage du levier de manoeuvre (1) est configuré de manière à amortir par une friction élevée son mouvement quand il bascule en direction longitudinale pour commuter un rapport.

10. Dispositif d'actionnement selon l'une quelconque des revendications 6 à 9,
**caractérisé en ce que**
le point de montage du levier de manoeuvre (10) est configuré de manière à amortir par une friction élevée son mouvement quand il bascule en direction transversale pour sélectionner un rapport.

11. Dispositif d'actionnement selon l'une quelconque des revendications 6 à 10,
**caractérisé en ce que**
dans l'articulation faite d'une rotule et d'une rotule creuse, servant à relier la tige de soutien (14) à la troisième barre (27), la rotule est montée dans la rotule creuse par l'intermédiaire d'une cage (42) dans laquelle est logée la rotule, cette cage (42) étant montée dans l'évidement (10) de la rotule creuse avec jeu selon la direction longitudinale de la tige de soutien (14) et sous contrainte élastique.

12. Dispositif d'actionnement selon la revendication 11,
**caractérisé en ce que**
la contrainte élastique de la cage (42) est produite par un élément en caoutchouc (40).
